# EUROPÄISCHE PATENTSCHRIFT

(11) **EP 2 247 906 B1**
(45) Veröffentlichungstag und Bekanntmachung des Hinweises auf die Patenterteilung: **29.01.2014**
(21) Anmeldenummer: 09713390.4
(22) Anmeldetag: 23.02.2009
(51) Int. Cl.: F02C 1/04, F02C 7/10, F28D 17/00, F28D 20/00

(54) **WÄRMESPEICHEREINRICHTUNG**
HEAT ACCUMULATOR
DISPOSITIF ACCUMULATEUR DE CHALEUR

(30) Priorität: 21.02.2008 AT 2892008
(43) Veröffentlichungstag der Anmeldung: 10.11.2010
(73) Patentinhaber: Schweighofer, Franz, 5020 Salzburg (AT); Egartner, Albert, 5020 Salzburg (AT)
(72) Erfinder: Schweighofer, Franz, 5020 Salzburg (AT); Egartner, Albert, 5020 Salzburg (AT)
(74) Vertreter: Sonn & Partner Patentanwälte
(86) Internationale Anmeldenummer: PCT/AT2009/000073
(87) Internationale Veröffentlichungsnummer: WO 2009/103106

(56) Entgegenhaltungen:
- EP-A- 1 967 398
- WO-A-01/61261
- CH-A- 311 371
- CH-A5- 598 535
- DE-A1- 3 402 438
- DE-A1- 3 502 565
- FR-A- 2 608 883
- GB-A- 2 280 745
- US-A- 2 642 338
- US-A- 2 643 937
- US-A1- 2004 178 189

## Beschreibung

Die Erfindung betrifft eine Wärmespeichereinrichtung mit einem Behälter, der durch eine Trennwand in eine innere Kernzone und in eine äußere Ringzone unterteilt ist, die ein Wärmespeichermedium enthält, wobei auch die innere Kernzone zur Bildung einer heißen Zone ein Wärmespeichermedium enthält, und dieser Kernzone Heizmittel zugeordnet sind. Derartige Wärmespeichereinrichtungen sind beispielsweise aus der CH 598 535 A5 und der DE 3 402 438 A1 bekannt.

Weiters bezieht sich die Erfindung auf eine vorteilhafte Verwendung einer vorliegenden Wärmespeichereinrichtung.

In der DE 100 39 246 C ist ein System zum Umwandeln von thermischer Energie in mechanische Arbeit beschrieben, wobei zumindest zwei Wärmespeicher, auch Regeneratoren genannt, vorgesehen sind, die konzentrisch zu einer Kernzone eine äußere Ringzone mit darin enthaltenem Schüttgut als Wärmespeichermedium aufweisen. Die beiden Regeneratoren können abwechselnd in einem Vorwärmzweig oder in einem Turbinenzweig eingeschaltet werden, wobei im Vorwärmzweig eine Aufheizung des Schüttguts erfolgt und im Turbinenzweig die Abgabe von Wärmeenergie an hindurchgeführte Luft zum Antreiben einer Turbine verwendet wird. Dieses bekannte System ist im Hinblick auf die Verwendung von mehreren Speichern wenig effizient, wobei auch das Umschalten der Regeneratoren von einem Zweig in den anderen mit einem Aufwand verbunden ist.

Die DE 41 08 744 C1 beschreibt einen Regenerator zum Aufheizen von Gasen, der durch zwei konzentrische Wandungen in einen Sammelraum mit Ein- bzw. Auslassöffnungen für kaltes bzw. heißes Gas, einen hohlzylindrischen Zwischenraum mit einem schüttgutförmigen Speichermedium, und einen zylindrischen Innenraum unterteilt wird. Im Bodenbereich des Gehäuses sind Zuführungen für Gase oder Brennvorrichtungen vorgesehen. Die innere Wandung besteht aus hoch hitzebeständigen, keramischen Bausteinen, deren massive Teile eine Hohlraum aufweisen, in dem ein feinkörniges, mit Kleber verfestigtes Schüttgut enthalten ist.

In US 6 631 754 B1 ist ein regenerativer Wärmetauscher geoffenbart, der, während einer Gasphase, Wärme von einem heißen Gas sammelt und anschließend an kalte Luft abgibt, und der in mindestens drei ringförmige, konzentrische Räume unterteilt ist. Der erste Raum definiert eine äußere bzw. kalte Sammelkammer, der zweite Raum definiert eine zylindrische innere bzw. heiße Sammelkammer in der Mitte der Einheit, und der dritte Raum definiert einen Unterbau mit einem hitzebeständigen, partikelförmigen Wärmespeichermaterial zwischen einem kalten und einem heißen Gitter. Das heiße Gas kommt hier von einer Verbrennungskammer, die sich teilweise in der heißen Sammelkammer befindet.

DE 42 36 619 A1 beschreibt einen Regenerator zum Aufheizen von Gasen, der in einen äußeren, kalten Sammelraum, einen ein schüttgutförmiges Wärmespeichermedium aufnehmenden Zwischenraum und einen inneren, heißen Sammelraum unterteilt ist. Von einem Vormischbrenner erzeugte Heizgase werden durch Zuführungen im Bodenbereich in den inneren Sammelraum geleitet und, nachdem sie durch das Wärmespeichermedium hindurchgetreten sind, durch einen Abgaskamin, der mit dem äußeren Sammelraum verbunden ist, abgeleitet.

DE 195 21 673 A1 betrifft ein Verfahren zur regenerativen Abluftreingung, bei dem ein Regenerator mit eine zylindrischen Gehäuse verwendet wird. Das Gehäuse umfasst einen kalten und einen heißen Rost, zwischen welchen sich ein Ringraum mit einer schüttgutförmigen Speichermasse befindet. Beide Roste sind zweimal durch gasundurchlässige Bereiche unterbrochen, wodurch drei Sammelkanäle gebildet werden, an die eine Anordnung von drei Zu- und Ableitungen angeschlossen ist. Ein Erhitzen der Abluft erfolgt beim Strömen durch die Speichermasse und den heißen Rost in den Sammelkanal. Eine Rückkühlung erfolgt beim Strömen durch die Speichermasse in entgegengesetzter Richtung.

In der FR 2 608 883 A ist andererseits ganz allgemein eine elektrische Widerstandsheizung mit ausgeschnittenen Blechen geoffenbart, an deren Rändern Verbindungsstreifen mit Einsteck-Vorsprüngen vorgesehen sind. Diese Einsteck-Vorsprünge dienen jedoch zur Befestigung an einer Halteplatte.

Es ist nun Aufgabe der Erfindung, eine Wärmespeichereinrichtung der eingangs angeführten Art vorzusehen, mit der eine höchst effiziente Nutzung der Wärmeenergie ermöglicht wird, und bei der außerdem thermische Verluste minimiert werden, so dass ein hoher Wirkungsgrad erzielt werden kann.

Zur Lösung dieser Aufgabe sieht die Erfindung eine Wärmespeichereinrichtung mit den Merkmalen des Anspruchs 1 vor. Vorteilhafte Ausführungsformen und Weiterbildungen sind in den abhängigen Ansprüchen angegeben.

Überdies sieht die Erfindung in vorteilhafter Weise eine Verwendung der Wärmespeichereinrichtung in einem Kreis mit einer Turbine, die einen Verdichter und einen Stromgenerator antreibt, und vorzugsweise mit zumindest einem Wärmetauscher vor.

Bei der vorliegenden Wärmespeichereinrichtung liegt somit eine elektrische Widerstandsheizung vor, die rechenförmig ausgeschnittene Bleche, vorzugsweise aus Edelstahl aufweist, die an gegenüberliegenden Rändern Verbindungsstreifen aufweisen, die je mit Einstecköffnungen bzw. -vorsprüngen zur Verbindung mit benachbarten Blechen versehen sind, und zwischen denen sich durch das Ausschneiden erhaltene, z.B. nur ca. 1,5 mm breite, Stege als Heizelemente erstrecken. Durch Ineinanderstecken der Einsteckvorsprünge oder Einstecköffnungen von abwechselnd um 180° gegeneinander verdrehten Blechen wird eine selbsttragende Struktur der Widerstandsheizung erhalten, so dass es sich erübrigt, die Widerstandsheizelemente auf hitzefesten, z.B. keramischen Trägern anzubringen. Die durch die Stege der Bleche gebildeten eigentlichen Heizelemente können ohne eine derartige Trägerkonstruktion direkt einem Luftstrom ausgesetzt werden; in diesem Fall wird bevorzugt als Speichermaterial für die Speicherung der Wärmeenergie Schamott oder Magnesitmaterial oder dergl. verwendet. Es kann aber auch die elektrische Widerstandsheizung direkt in der Kernzone angebracht werden. Eine derartige elektrische Widerstandsheizung kann im Prinzip auch dem Wärmespeichermedium in der Ringzone zugeordnet sein, sollte dies für zweckmäßig erachtet werden. Bevorzugt wird bei der vorliegenden Wärmespeichereinrichtung, um Wärmeverluste möglichst niedrig zu halten, ein Temperaturgradient in der Kernzone in der Form herbeigeführt, dass die Temperatur von oben nach unten abnimmt.

Jedenfalls liegt im Betrieb eine heiße Kernzone vor, in der das dort enthaltene Wärmespeichermedium im Betrieb durch die zugehörigen Heizmittel erwärmt wird, wobei von diesem Wärmespeichermedium in der Kernzone in einer Aufheiz-Betriebsart Wärmeenergie an das Wärmespeichermedium in der Ringzone abgegeben wird. Das Heizen kann beispielsweise durch Hindurchleiten von Heißluft oder allgemein von einem Wärmetauschermedium zuerst durch die Kernzone und dann durch die Ringzone bewerkstelligt werden. Die Heißluftzufuhr kann an der Oberseite der Kernzone vorgesehen sein.

Als Wärmespeichermedium kann ein quarzfreies Gestein vorgesehen werden, es können Steine aus Magnesit, aus Schamott usw. vorgesehen werden. In an sich bekannter Weise kann das Wärmespeichermedium auch durch Schüttgut gebildet sein, wobei bei der vorliegenden Wärmespeichereinrichtung als Schüttgut bevorzugt annähernd kugelförmige Steine mit einem Durchmesser von ca. 5 cm bis 10 cm vorgesehen werden.

Die die beiden Zonen voneinander trennende Trennwand wird vorzugsweise isolierend ausgeführt. In der Trennwand kann weiters zur Verbindung der beiden Zonen zumindest eine Verbindungsleitung untergebracht werden; diese Verbindungsleitung(en) kann (können) beispielsweise die Unterseite der Kernzone mit der Oberseite der Ringzone verbinden. An der Oberseite der Ringzone kann ferner eine Wärmetauschermedium-Leitung angeschlossen sein, und eine andere Wärmetauschermedium-Leitung kann sich in der Ringzone von deren Oberseite durch das in der Ringzone vorhandene Wärmespeichermedium zum Boden der Ringzone erstrecken.

In der Kernzone und/oder in der Ringzone kann bodenseitig ein Rost mit darunter befindlichem Sammelraum vorgesehen sein. Denkbar ist dabei, dass beispielsweise nur unterhalb des Wärmespeichermediums in der Ringzone ein Rost vorliegt, so dass nur dort ein unterer Sammelraum gegeben ist. Die Sammelräume oder Sammelkammern ermöglichen in vorteilhafter Weise ein Anschließen von Wärmetauschermedium-Leitungen, je nach Verwendungszweck der Wärmespeichereinrichtung und deren Einbau in einem System mit Turbine und Wärmetauscher. In einer vorteilhaften Ausführung ist sowohl unterhalb eines Kernzonen-Rosts als auch eines Ringzonen-Rosts ein Sammelraum vorhanden, und die beiden Sammelräume sind wie die übrigen Teile der Zonen durch die Trennwand voneinander getrennt. An diese getrennten Sammelräume können weiters in einer Ausführung mit vereinfachter Wärmetauschermedium-Führung nach außen führende Wärmetauschermedium-Leitungen angeschlossen sein. Andererseits können die vorerwähnten Verbindungsleitungen auch von dem Sammelraum unterhalb des Kernzonen-Rosts zur Oberseite der Ringzone und einem dort befindlichen Sammelraum führen.

Zur besonders effizienten Vermeidung von Wärmeenergie-Verlusten kann der Behälter eine Wandung aufweisen, die mit einer äußeren Hülle und einer inneren Isolierwand ausgeführt ist. Dabei ist es weiters günstig, wenn zwischen der äußeren Hülle und der inneren Isolierwand eine Luftschicht zur zusätzlichen Wärmedämmung vorgesehen ist.

Bei der vorliegenden Wärmespeichereinrichtung kann eine Ausführung in Kreisform, aber auch mit quadratischem oder mehreckigem bzw. polygonalem Querschnitt vorgesehen werden. Die äußere Hülle kann aus Stahlbeton, gegebenenfalls aber auch aus Stahl ausgeführt sein; im Fall einer druckfesten Ausführung kann die Hülle dem Druck, der in der Brennkammer einer Gasturbine herrscht (als Folge des Verdichters), standhalten.

Die vorliegende Wärmespeichereinrichtung wird mit Vorteil als Hochtemperatur-Wärmespeicher, beispielsweise zur Speicherung von regenerativ (durch Windkraft, Photovoltaik) erzeugter elektrischer Energie eingesetzt und kann bei Verwendung in einem Kreis mit einer Turbine und einem rotierenden Energiewandler (Stromgenerator, insbesondere Drehstromgenerator) zur Netzstabilisierung bzw. zur Bereitstellung von Verbraucher-konformer elektrischer Energie eingesetzt werden. Demgemäß wird die regenerativ erzeugte elektrische Energie in Wärmeenergie umgewandelt und im vorliegenden Hochtemperatur-Speicher (HTS) als Wärmeenergie gespeichert. Die Umwandlung in Wärmeenergie kann wie erwähnt durch direkte Heizung im Wärmespeicher mit Hilfe von elektrischen Widerständen oder aber durch indirekte Beheizung, beispielsweise mittels elektrisch aufgeheizter Heißluft, bewerkstelligt werden. Im Fall einer elektrischen Direktbeheizung werden bevorzugt als Wärmespeichermedium Formsteine aus Magnesit oder Schamott eingesetzt, wogegen im Fall von Heißluft bevorzugt ungefähr kugelförmige Steine (quarzfrei) als Schüttgut für das Wärmespeicher-medium eingesetzt werden. Aufgrund des konzentrischen Aufbaus des Wärmespeichers mit dem heißen inneren Kern können Wärmeverluste aus dem Kern durch die isolierende Trennwand hindurch in der äußeren Zone, der Ringzone, vom dort vorhandenen Wärmespeichermedium aufgenommen werden; die Ringzone selbst ist nach außen wieder thermisch isoliert, jedoch treten wegen der dort vorhandenen vergleichsweise niederen Temperatur auch geringere Wärmeverluste auf.

Durch die temperaturmäßige Schichtung von unten nach oben kommt es nur zu einem geringen Temperaturausgleich über die durch Gewichtsunterschiede zirkulierende Luft, vergleichbar einer Inversionswetterlage, wenn die oberen Luftschichten wärmer sind als die unteren und es daher zu keinem Luftaustausch zwischen diesen Luftschichten kommt.

Die gespeicherte Wärmeenergie wird bei Bedarf in einer Heißgasturbine in mechanische Energie und in der Folge mit Hilfe eines Drehstromgenerators oder dergl. in elektrische Energie umgewandelt. Bei dieser Rückumwandlung ist ein relativ schlechter thermodynamischer Wirkungsgrad gegeben, so dass Verlustwärme anfällt; diese kann gegebenenfalls in einem zweiten Wärmespeicher wieder gespeichert werden. Die beiden Hochtemperatur-Wärmespeicher werden dann abwechselnd betrieben, wobei sie je wie erwähnt einen außerordentlich geringen internen Wärmeaustausch aufweisen. Die Speicherung von Abwärme auf relativ niedrigem Temperaturniveau funktioniert hier gut, da im Hochtemperatur-Wärmespeicher wie erwähnt die Temperaturdifferenzen erhalten bleiben. Im Fall eines derartigen abwechselnden Betriebs von zwei Wärmespeichern kann fast die gesamte Abwärme-Energie wieder gespeichert werden. Wesentlich ist dabei, dass in einem der Wärmespeicher immer Zonen mit relativ niedriger Temperatur vorliegen, so dass viel Abwärme gespeichert werden kann. Zonen mit niederer Temperatur entstehen immer wieder, da Umgebungsluft in die äußere Zone des momentan als "Brennkammer" für die Gasturbine arbeitenden Wärmespeichers geblasen wird und dort nur der innere Kern auf beispielsweise 800°C bis 900°C aufgeheizt wird.

Die Erfindung wird nachfolgend anhand von besonders bevorzugten Ausführungsbeispielen, auf die sie jedoch nicht beschränkt sein soll, unter Bezugnahme auf die Zeichnung noch weiter erläutert. In der Zeichnung zeigen im Einzelnen:
die Figuren 1A und 2A eine Hochtemperatur-Wärmespeichereinrichtung gemäß der Erfindung in einem Vertikalschnitt (Fig. 1A) bzw. Horizontalschnitt (Fig. 2A), wobei zur Aufheizung der Kernzone mit einer elektrischen Widerstandsheizung (siehe Fig. 14, 15) erhitzte Heißluft verwendet wird, und wobei in Fig. 1A mit Pfeilen die Luftströmung in der Betriebsart "Heizen" veranschaulicht ist;
die Figuren 1B und 2B in entsprechenden Schnittdarstellungen diese Wärmespeichereinrichtung während der Betriebsart "Entladen";
die Figuren 1C und 2C in entsprechenden Schnitten diese Wärmespeichereinrichtung während der Betriebsart "Rekuperieren";
die Figuren 3 und 4 in entsprechenden Vertikal- und Horizontal-Schnittdarstellungen eine gegenüber Fig. 1 und 2 modifizierte Wärmespeichereinrichtung mit einer elektrischen Widerstandsheizung in der Kernzone;
die Figuren 5A und 6A bzw. 5B und 6B eine Hochtemperatur-Wärmespeichereinrichtung gemäß der Erfindung mit vereinfachter Luftführung, und zwar in der Betriebsart "Heizen" (Fig. 5A, 6A) und in der Betriebsart "Entladen" (Fig. 5B, 6B);
Fig. 7 in einem Schema die Verwendung einer Wärmespeichereinrichtung gemäß Fig. 5 und 6 in einem Kreis mit einer Gasturbine, einem Verdichter und einem Drehstromgenerator sowie mit einem Wärmetauscher;
Fig. 8 die Verwendung von zwei Wärmespeichereinrichtungen gemäß Fig. 1 und 2 in einem Kreis mit zwei Wärmetauschern;
Fig. 9 einen Kreis mit zwei Hochtemperatur-Wärmespeichereinrichtungen mit einfacher Luftführung und ohne Wärmetauscher;
Fig. 10 einen Querschnitt durch eine Hochtemperatur-Wärmespeichereinrichtung, wie sie im Kreis gemäß Fig. 9 verwendet wird;
Fig. 11 die Verwendung einer Wärmespeichereinrichtung gemäß Fig. 5 und 6 in einem Kreis mit zwei Wärmetauschern, wobei eine drucklose Ausführung der Wärmespeichereinrichtung vorgesehen ist;
Fig. 12 die Verwendung einer der Ausführungsform gemäß Fig. 1 und 2 sehr ähnlichen, jedoch hinsichtlich der Verbindung zwischen der Kernzone und der Ringzone modifizierten Wärmespeichereinrichtung in einem Kreis mit einem Wärmetauscher und mit einer Heißluftheizung;
Fig. 13 einen Querschnitt durch die im Kreis gemäß Fig. 12 verwendete, gegenüber Fig. 1 und 2 modifizierte Wärmetauschereinrichtung;
Fig. 14 eine Vorderansicht eines Blechs für eine elektrische Widerstandsheizung; und
Fig. 15 eine schematische Seitenansicht von mehreren durch einfaches Zusammenstecken miteinander verbundenen Blechen gemäß Fig. 14, wobei eine selbsttragende elektrische Widerstandsheizeinheit erhalten ist.

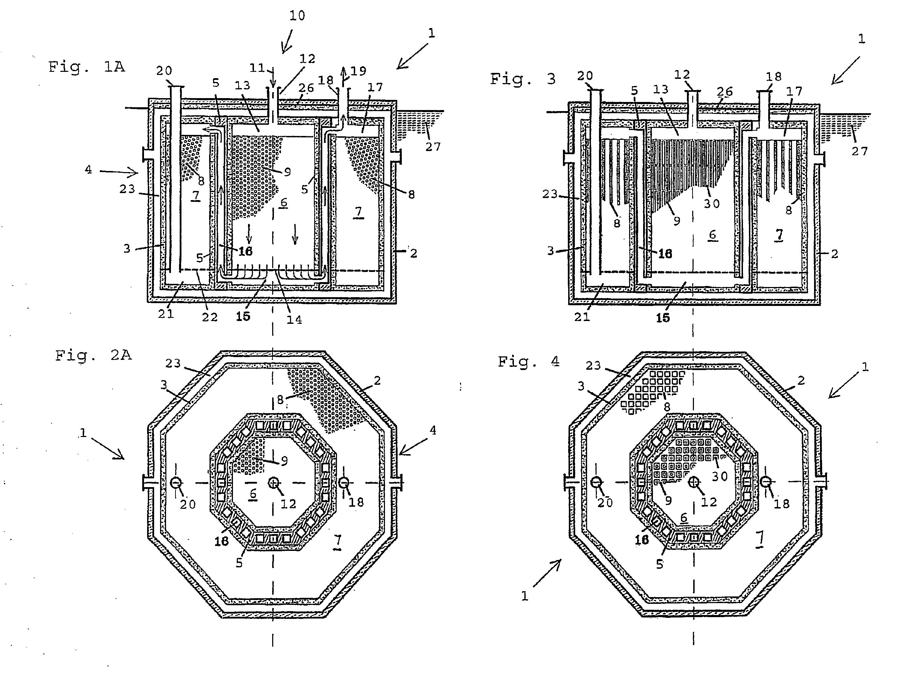

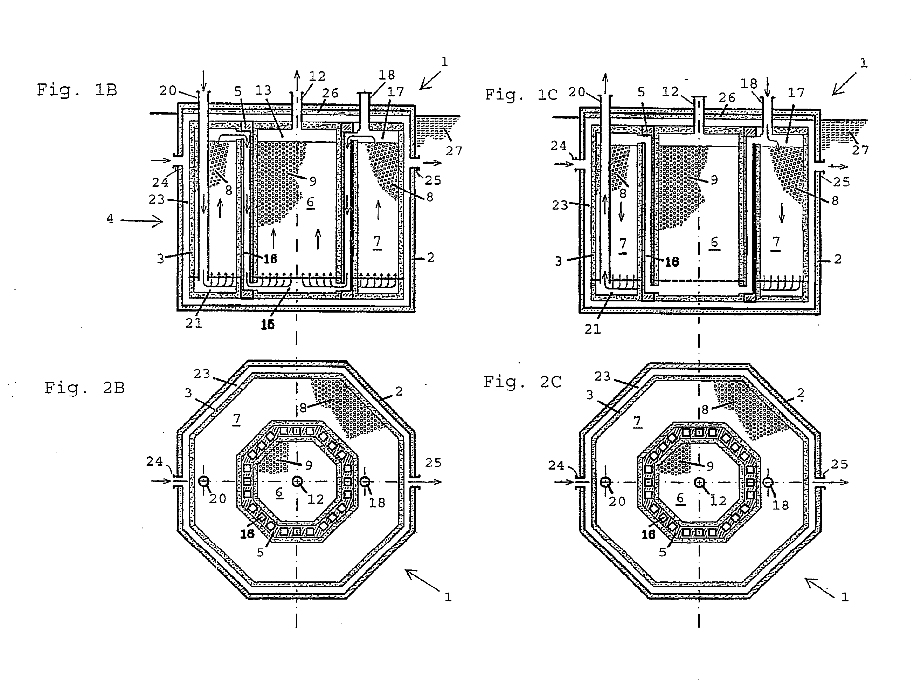

In den Figuren 1 und 2 ist eine erste Ausführungsform einer erfindungsgemäßen Wärmespeichereinrichtung, nachstehend kurz Wärmespeicher oder aber auch Hochtemperatur-Wärmespeicher bzw. Hochtemperatur-Speicher (HTS) genannt, veranschaulicht, wobei in den Figurenbezeichnungen durch Hinzufügung der Buchstaben A, B und C verschiedene Betriebszustände des Wärmespeichers 1 (Heizen - A; Entladen - B; Rekuperieren - C) angegeben sind.

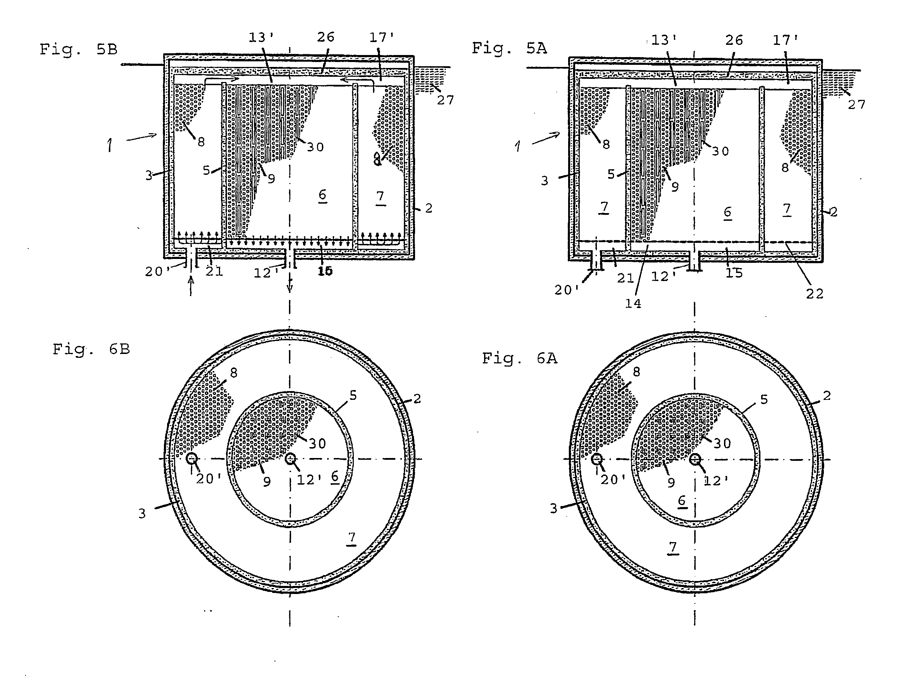

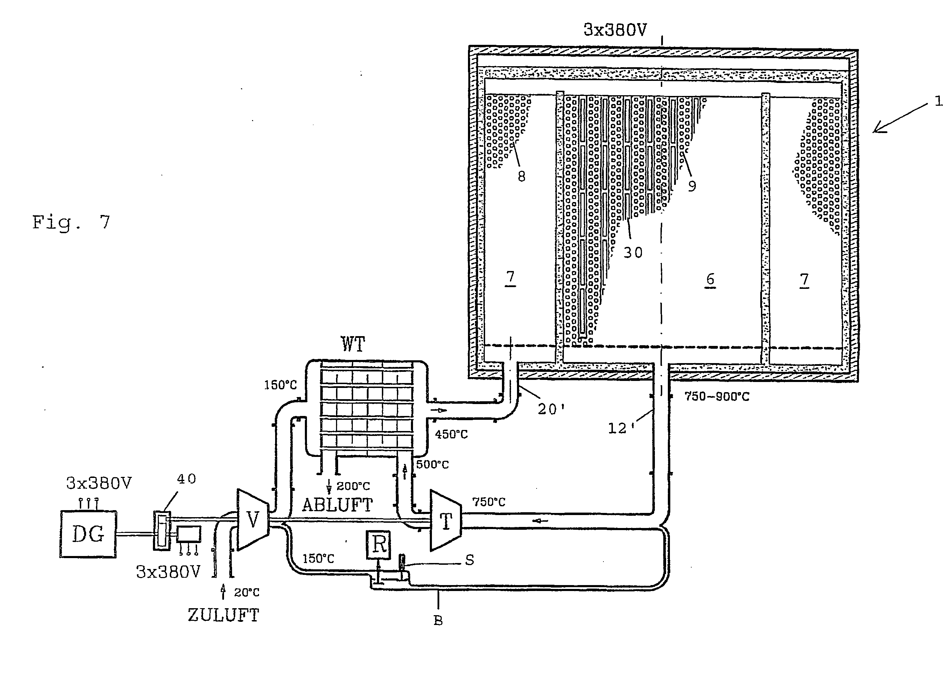

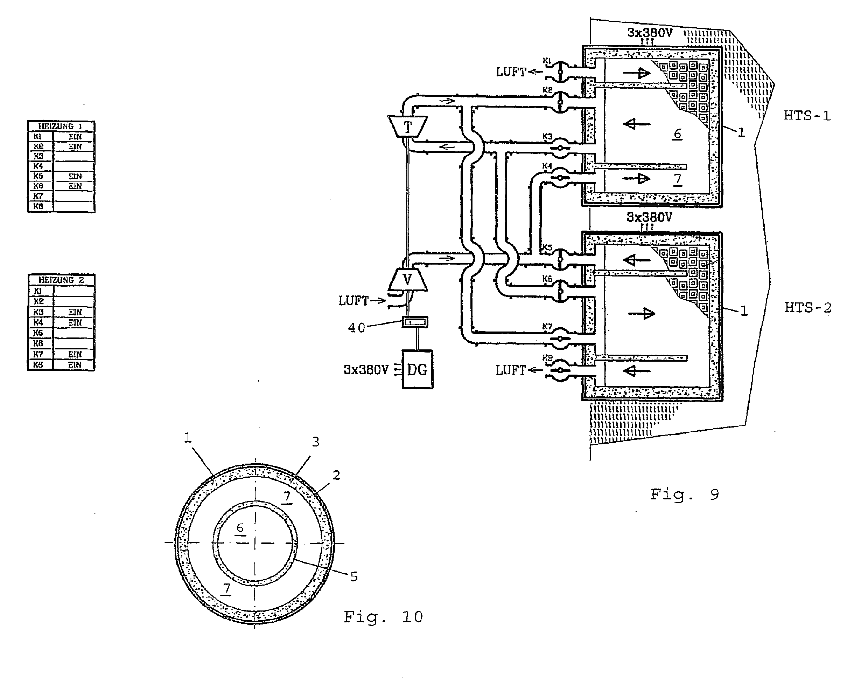

Der Wärmespeicher 1 weist eine Außenhülle 2 auf, die im Querschnitt beispielsweise achteckig ist, aber auch kreisrund (vgl. Fig. 6 oder 10) oder aber quadratisch, sechseckig etc., allgemein polygonal, sein kann. Diese Außenhülle 2 kann beispielsweise aus Stahlbeton oder aus Stahl ausgeführt sein, und sie ist gegebenenfalls druckfest, so dass sie dem Druck, der in der Brennkammer einer Gasturbine - aufgrund des Einsatzes eines Verdichters V (vgl. auch die nachfolgenden Ausführungen zu Fig. 7 etc.) - gegeben ist, standhalten kann. Innerhalb der äußeren Hülle 2 befindet sich eine Innenwand 3, die insbesondere zur Isolierung dient, und nachfolgend daher einfach auch als (innere) Isolierwand 3 bezeichnet wird. Auf diese Weise wird ein Behälter 4 erhalten, der in seinem Inneren, durch eine Trennwand 5 voneinander getrennt, eine innere Kernzone 6 sowie eine äußere Ringzone 7 aufweist. Die Ringzone 7 enthält ein Wärmespeichermedium 8, und auch die Kernzone 6 enthält ein Wärmespeichermedium 9. Im gezeigten Ausführungsbeispiel gemäß Fig. 1 und 2 kann dieses Wärmespeichermedium, nachstehend auch kurz Speichermaterial genannt, aus ungefähr kugelförmigem, temperaturbeständigem, quarzfreiem Gestein, etwa mit einem Durchmesser von ca. 5 cm bis 10 cm, aber auch aus einem entsprechenden Schamottmaterial oder Magnesitmaterial oder dergl. bestehen. Der Temperaturbereich des Speichermaterials 8, 9 beträgt beispielsweise bis zu ca. 1000°C.

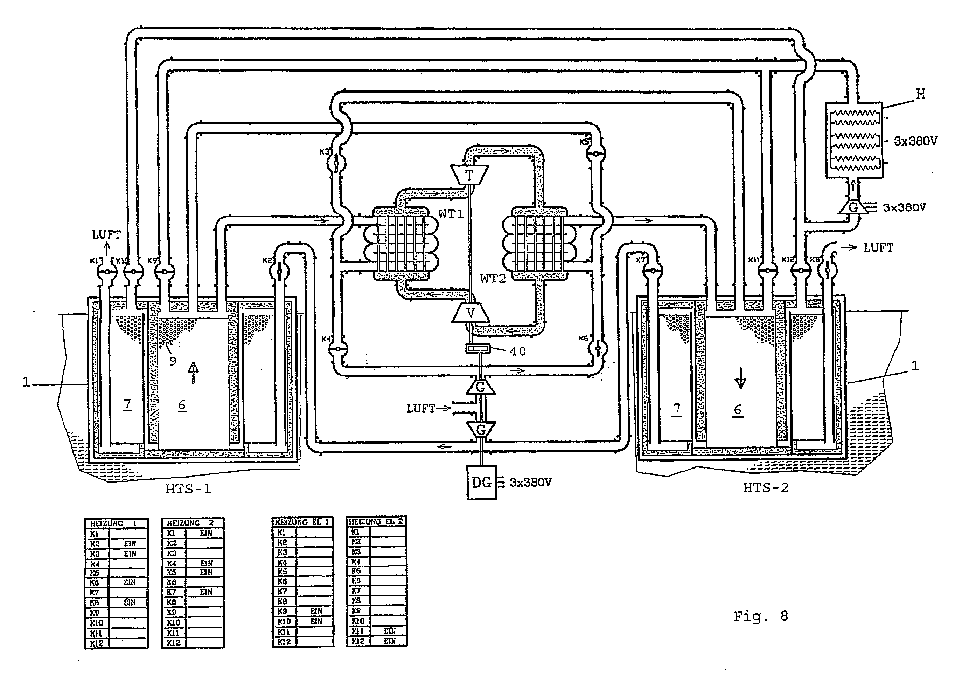

Dem Speichermaterial 9 in der Kernzone 6 ist ein Heizmittel 10 mit einer hier nicht näher veranschaulichten elektrischen Widerstandsheizung zugeordnet, wobei in der Ausführungsform gemäß Fig. 1 und 2 in der Folge eine Heißluftzufuhr gebildet ist, s. auch Pfeil 11 in Fig. 1A. Die Heißluft 11 wird dabei einer oberen Leitung 12 zugeführt, die in einen Sammelraum 13 oberhalb des Speichermaterials 9 in der Kernzone 6 mündet. Die Heißluft strömt dann in der Betriebsart "Heizen" (s. Fig. 1A und 2A) von oben durch das Speichermaterial 9 der Kernzone 6 nach unten, wo unterhalb eines Rosts 14 ein Sammelraum 15 vorhanden ist; von diesem Sammelraum 15 gelangt die heiße Luft, die nunmehr bereits etwas abgekühlt ist, über mehrere Verbindungsleitungen 16, die hier innerhalb der Trennwand 5 verlaufen, nach oben zu einem oberen ringförmigen Sammelraum 17 oberhalb des Speichermaterials 8 in der Ringzone 7 und von dort über eine Leitung 18, die an den oberen Sammelraum 17 anschließt, gemäß Pfeil 19 in einen in Fig. 1 nicht näher gezeigten Kreislauf, vgl. aber z.B. Fig. 8.

In der Ringzone 7 erstreckt sich weiters eine Leitung 20 von außerhalb des Behälters 4 zu einem Sammelraum 21 unterhalb eines das Speichermaterial 8 tragenden Rosts 22 in der Ringzone 7, wobei in der Betriebsart "Entladen" (s. Fig. 1B und 2B) Luft von oben durch diese Leitung 20 zum unteren Sammelraum 21 zugeführt wird, von wo sie durch das Speichermaterial 8 in der Ringzone 7 aufsteigt, dann über die Verbindungsleitungen 16 zum unteren Kernzonen-Sammelraum 15 gelangt, von dort durch das Speichermaterial 9 nach oben steigt und über die Leitung 12 abgezogen wird. Die Leitung 18 ist in dieser Betriebsart "Entladen" verschlossen.

Im Ausführungsbeispiel gemäß Fig. 1 und 2 ist zwischen der äußeren Hülle 2 und der Isolierwand 3 ein Luftraum 23 mit einer isolierenden Luftschicht enthalten, und dieser Luftraum 23 ist durch eine Zuluftleitung 24 und eine Abluftleitung 25 an einen Abwärmeluft-Kreis anschließbar, wobei in den Betriebsarten "Entladen" und "Rekuperieren" diese Leitungen 24, 25 offen und angeschlossen sind, um Abwärmeluft zur Erhöhung der Manteltemperatur des Wärmespeichers 1 bzw. zur Verringerung der Temperaturdifferenz zwischen der Ringzone 7 und der Umgebung zu- bzw. abzuführen. An sich kann aber diese Nutzung von Abwärmeluft auch entfallen, so dass dann in der äußeren Hülle 2 keine Leitungen 24, 25 vorgesehen sind.

An der Oberseite des Behälters 4 befindet sich innerhalb des dortigen Teils der äußeren Hülle 2 eine Deckenisolierung 26 aus einem temperaturbeständigen, vorzugsweise druckfesten Isoliermaterial mit einer Hitzebeständigkeit bis beispielsweise ca. 900°C.

Die verschiedenen Leitungen 12, 18, 20, 24, 25 können aus temperaturfestem Edelstahl bestehen.

Die Luftschicht im Luftraum 23 zwischen der äußeren Hülle 2 und der Isolierwand 3 des Behälters 4 des Wärmespeichers 1 dient zur Erhöhung der Umgebungstemperatur der äußeren Hülle 2. Da bei allen thermodynamischen Prozessen Verlustwärme anfällt, kann mit dieser Maßnahme das Temperaturniveau angehoben werden, und durch die Verringerung der Temperaturdifferenz zwischen der Isolierwand 3 und der äußeren Hülle 2 können die Entladungsverluste des Wärmespeichers 1 reduziert werden. Die Luftschicht bzw. der Luftraum 23 kann jedoch auch entfallen, wenn die Verlustwärme des Kreises durch andere Abnehmer genützt werden kann, vgl. beispielsweise die Ausführungsform gemäß Fig. 5 und 6.

Der Wärmespeicher 1 kann beispielsweise in Erdreich 27 eingegraben werden, wenngleich auch eine nur teilweise im Erdreich eingegrabene Anordnung oder aber auch eine freistehende Anordnung des Wärmespeichers 1 möglich und sinnvoll ist.

Selbstverständlich ist es auch möglich, mehrere Leitungen 18 bzw. 20 (oder auch 12) vorzusehen. Die Leitung 20 kann in dem Bereich, der durch das Speichermaterial 8 führt, auch außer aus hitzefestem Stahl aus Schamott- oder Magnesitsteinen oder dergl. ausgeführt sein.

Die Betriebsarten "Heizen" und "Entladen" wurden vorstehend bereits in Zusammenhang mit den Figuren 1A, 2A bzw. 1B, 2B kurz erwähnt; zur Betriebsart "Rekuperieren", vgl. Fig. 1C und 2C, ist ergänzend zu den vorstehenden Ausführungen noch anzuführen, dass beim Rekuperieren die mittlere Leitung 12 zur Kernzone 6 geschlossen ist, und dass Luft über die Leitung 18 der Ringzone 7 zugeführt wird, von wo sie über die Leitung 20, nach Sammeln in dem unteren Sammelraum 21 der Ringzone 7, wieder abgeführt wird.

Wenn vorstehend auf Luft-Leitungen (12, 18, 20, 24, 25) Bezug genommen wurde, so sollte dies nicht einschränkend verstanden werden, da im Prinzip andere Wärmetauschermedien außer Luft ebenfalls denkbar sind; diese Leitungen sollten daher allgemein im Sinne von Wärmetauschermedium-Leitungen verstanden werden.

Die Trennwand 5 zwischen der Kernzone 6 und der Ringzone 7 kann aus Schamott- oder Magnesitsteinen, aber auch aus hitzefestem Stahl oder dergl. bestehen; in der Ausführungsform gemäß Fig. 1 und 2 sind die Verbindungsleitungen 16 innerhalb dieser Trennwand 5 untergebracht.

Die unteren Sammelräume 15 bzw. 21 befinden sich wie erwähnt unter einem zentralen Rost 14 bzw. einem ringförmigen Rost 22. Auch hier ist die Bezeichnung "Rost" nicht eng zu verstehen, vielmehr kann das darüber befindliche Speichermaterial 9 bzw. 8 durch irgendein tragfähiges Gebilde aus hitzefestem Stahl oder aber aus Schamott- bzw. Magnesitsteinen oder dergl. getragen werden, wobei diese tragfähige Konstruktion, also der "Rost" 14 bzw. 22, mit Luftöffnungen versehen ist, so dass die Luft von oben nach unten oder umgekehrt durch den Rost 14 bzw. 22 und durch das jeweilige Speichermaterial 9 bzw. 8 strömen kann.

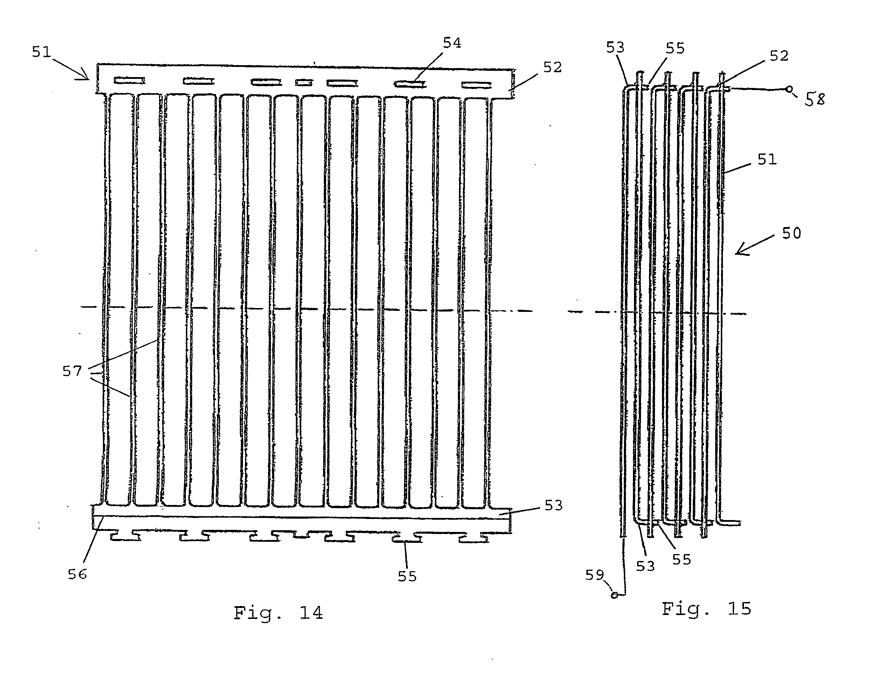

In Fig. 3 und 4 ist in einem Vertikalschnitt bzw. Horizontalschnitt eine insofern gegenüber Fig. 1 und 2 modifizierte Ausführungsform des Wärmespeichers 1 gezeigt, als in der Kernzone 6 direkt eine Aufheizung des Wärmespeichermediums 9 mit Hilfe einer elektrischen Widerstandsheizung 30 als Heizmittel 10 vorgesehen ist. Eine mögliche Ausführung eines elektrischen Heizkörpers wird nachstehend noch anhand der Fig. 14 und 15 erläutert werden. Wird eine derartige elektrische Widerstandsheizung 30 zur Direktheizung angewendet, dann ist das Speichermaterial 9 zweckmäßig aus Formsteinen ausgeführt.

Eine derartige elektrische Widerstandsheizung 30 kann auch gewünschtenfalls in der Ringzone 7, zur Erwärmung des dortigen Speichermaterials 8, vorgesehen sein. Von besonderer Bedeutung ist aber jedenfalls die Erwärmung des Speichermaterials 9 in der Kernzone 6, in der Ausführungsform gemäß Fig. 3 und 4 (sowie auch der nachfolgend noch näher zu erläuternden Ausführungsform gemäß Fig. 5 und 6) direkt durch elektrisches Heizen, wobei das Kernzonen-Speichermaterial 9 einen Temperaturbereich bis zu ca. 1000°C aufweist.

Im Übrigen ist der Wärmespeicher 1 gemäß Fig. 3 und 4 ident zum Wärmespeicher 1 gemäß Fig. 1 und 2, so dass der Einfachheit halber auf die Beschreibung zu Fig. 1 und 2 bezüglich der übrigen Ausführung des Wärmespeichers 1 verwiesen werden kann.

Im Nachfolgenden soll noch einmal auf die verschiedenen Betriebszustände des Wärmespeichers 1, nämlich Entladen, Rekuperieren, Heizen, sowie auch auf das elektrische Heizen kurz hinsichtlich der Leitungsverbindungen näher eingegangen werden.

### Entladen (Fig. 1B, 2B):

Von der Umgebung durch die Leitung 20 angesaugte Luft wird durch das Speichermaterial 8 der Ringzone 7 vorgewärmt, durch die Verbindungsleitung(en) 16 der Kernzone 6 zugeführt und durch dessen Speichermaterial 9 auf z.B. ca. 750°C bis 900°C erwärmt. Die heiße Luft wird über die Leitung(en) 12 dem Wärmespeicher 1 entnommen.

### Rekuperieren (Fig. 1C, 2C):

Abluft (400°C bis 500°C) aus der (in Fig. 1 und 2 nicht gezeigten) Arbeitsmaschine (vgl. auch Fig. 7-12) wird über die Leitung(en) 18 des unteren ringförmigen Sammelraums 21 der Ringzone 7 zugeführt. Die Abluft erwärmt das Speichermaterial 8 der Ringzone 7 und wird durch die Leitung(en) 20 sowie danach über die Leitung(en) 24 und 25 der Luftschicht im Luftraum 23 zugeführt oder direkt als Abluft weiteren Niedertemperaturverbrauchern oder der Umgebung zugeführt.

### "Heizen mit Heißluft" (Fig. 1A, 2A) :

Über die Leitung(en) 12 wird z.B. von einem (in Fig. 1, 2 nicht gezeigten) Lufterhitzer H (vgl. Fig. 8) in Form einer elektrischen Widerstandsheizung (s. Fig. 14 und 15) ca. 900°C bis 1000°C heiße Luft in den Wärmespeicher 1 eingeblasen. Diese Luft heizt das Speichermaterial 9 der Kernzone 6 auf max. etwa 900°C auf. Die Abluft wird durch die Leitung(en) 18 zurück zum Lufterhitzer H geführt, so dass dieser nur die Temperaturdifferenz durch die Abkühlung der Luft am Speichermaterial 9 der Kernzone 6 nachheizen muss.

### "Direkt elektrisch Heizen" (Fig. 3, 4) :

Grundsätzlich kann die elektrische Heizung 30 auch in den Betriebszuständen "Entladen" und "Rekuperieren" verwendet werden. Wird nur geheizt, so sind alle Luftzuführungen soweit zu schließen, dass keine Luftbewegung in den Speicherzonen 6, 7 mehr stattfinden kann; vgl. Fig. 3 und 4. Die elektrische Heizung 30 kann nur in der Kernzone 6 oder aber im gesamten Speicherbereich 6, 7 angeordnet werden.

In den Fig. 5 und 6 (der Zusatzbuchstabe A steht wieder für die Betriebsart "Heizen", und der Zusatzbuchstabe B für die Betriebsart "Entladen") ist ein Wärmespeicher 1 mit einer gegenüber den Ausführungsformen von Fig. 1 bis 4 vereinfachten Luftführung gezeigt. Die nachfolgende Beschreibung soll sich in erster Linie auf die Unterschiede gegenüber den vorstehend beschriebenen Wärmespeichern 1 beschränken, um so Wiederholungen zu vermeiden.

Wie aus Fig. 5 und 6 ersichtlich, ist bei dem darin gezeigten Wärmespeicher 1, der im Querschnitt z.B. kreisförmig ausgebildet ist, der Luftraum zwischen der äußeren Hülle 2 und der Isolierwand 3 weggelassen, wohl aber ist die Deckenisolierung 26 vorgesehen. Unterhalb von dieser Deckenisolierung 26 bilden

Sammelzonen 13' und 17' - in Entsprechung zu den Sammelräumen 13 bzw. 17 gemäß Fig. 1 bis 4 - Sammelräume für die jeweilige Luft oberhalb der Kernzone 6 bzw. der Ringzone 7. In der Kernzone 6 ist wiederum ein Speichermaterial 9 vorgesehen, dem beispielsweise eine direkte Heizung mit Hilfe einer elektrischen Widerstandsheizung 30, ähnlich wie in Fig. 3 und 4 gezeigt, zugeordnet ist. Gemäß Fig. 6 ist hier eine elektrische Widerstandsheizung 30 mit Heizstäben im Speichermaterial 9 vorgesehen.

Im Gegensatz zu Fig. 1 bis 4 sind an der Oberseite des Wärmespeichers 1 gemäß Fig. 5 und 6 keine Luftleitungen vorgesehen; anstatt dessen sind an der Unterseite des Wärmespeichers 1 Leitungen 12' bzw. 20' vorgesehen, die an die unteren Sammelräume 15 bzw. 21 anschließen und beispielsweise aus temperaturfestem Edelstahl bestehen. Die Trennwand 5 aus einem temperaturbeständigen, hitzefesten und druckfesten Isoliermaterial separiert wiederum die Kernzone 6 von der äußeren Ringzone 7 und weist beispielsweise eine Hitzebeständigkeit bis zu 900°C auf, ähnlich wie das Isoliermaterial der Deckenisolierung 26.

Das Speichermaterial 8 bzw. 9 kann wiederum auf einem "Rost" 14 bzw. 22, allgemein einer tragfähigen Konstruktion aus Stahl oder aber aus Schamott- bzw. Magnesitsteinen oder dergl. mit Luftöffnungen, aufliegen, so dass Luft durch diesen Rost 14 bzw. 22 und das darüber befindliche Speichermaterial 9 bzw. 8 strömen kann, vgl. beispielsweise Fig. 5B. Die Trennwand 5 ist in dieser Ausführung mit vereinfachter Luftführung jedoch ohne die Verbindungsleitungen 16 gemäß Fig. 1 bis 4 ausgeführt.

Was die Betriebszustände des Wärmespeichers 1 gemäß Fig. 5 und 6 mit der vereinfachten Luftführung betrifft, so kann dieser Wärmespeicher in einer Anwendung mit Wärmetauscher als Rekuperator verwendet werden. Hierbei ist die Aufrechterhaltung von Temperaturdifferenzen im Wärmespeichermaterial nicht für die Funktion notwendig. Kleinere Speicher können sinnvollerweise mit elektrischer Direktheizung in der Kernzone 6 und in der Ringzone 7 ausgeführt werden. Weiters sind damit auch kleinere druckbehaftete Wärmespeicher ausführbar.

Zu den Betriebsarten "Entladen" und "(Elektrisch) Heizen" ist im Detail noch Folgendes auszuführen:

### Entladen (Fig. 5B, 6B) :

Die vom Wärmetauscher 1 über die Leitung(en) 20' angesaugte Luft mit einer Temperatur von 400°C bis 500°C wird durch die Ringzone 7 nach oben geleitet und durch das Speichermaterial 8 der Ringzone 7 vorgewärmt, wonach sie durch das Speichermaterial 9 der Kernzone 6 auf ca. 750°C bis 900°C erwärmt wird. Die heiße Luft wird über die Leitung(en) 12' dem Speicher 1 entnommen.

### Elektrisch Heizen (Fig. 5A, 5B) :

Grundsätzlich kann die elektrische Heizung 30 auch im Betriebszustand "Entladen" verwendet werden. Wird nur geheizt, so sind alle Luftzuführungen 12', 20' soweit zu schließen, dass keine Luftbewegung in den Speicherzonen 6, 7 mehr stattfinden kann. Die elektrische Heizung 30 kann auch vollständig im gesamten Speicherbereich anstatt wie gezeigt nur in der Kernzone 6 angeordnet werden.

Nachfolgend sollen nun anhand der Fig. 7 bis 13 verschiedene Beispiele für Anwendungen des erfindungsgemäßen Wärmespeichers 1 erläutert werden.

In Fig. 7 ist ein Beispiel für den Wärmetauscher 1 gemäß Fig. 5 und 6 in einem Kreis mit einem Wärmetauscher WT und einer Gasturbine T gezeigt. Der Wärmetauscher 1 ist druckfest ausgeführt, damit er den Ladedruck eines Verdichters V aushält, der von der Turbine T angetrieben wird.

Luft wird vom Verdichter V über den Wärmetauscher WT der Ringzone 7 des Wärmespeichers 1 zugeführt. Die Ringzone 7 und die Kernzone 6 erhitzen die Luft auf 750°C bis 900°C. Die heiße Luft expandiert in der Turbine T und liefert die mechanische Energie für den Verdichter V und einen Drehstromgenerator DG. Die etwa 500°C heiße Abluft der Turbine T wird durch den Wärmetauscher WT auf etwa 200°C abgekühlt. Eine weitere Abkühlung der Abluft wäre dann noch durch zusätzliche Wärmeverbraucher (Heizung, Prozesswärme, Kühlgeräte etc.) möglich. Um die Turbineneintrittstemperatur zu regeln, ist ein Bypass B mit einem Regelventil R zwischen dem Verdichteraustritt und dem Turbineneintritt geschaltet. Dem Bypass B ist auch ein Sicherheitsventil S zugeordnet.

Die Heizung des Wärmespeichers 1 erfolgt direkt durch eine elektrische Widerstandsheizung 30. Die Heizkörper sind in Formsteinen des Speichermaterials 9 der Kernzone 6 eingebettet. Es ist durchaus sinnvoll, bei dieser Anordnung auch das Speichermedium 8 der Ringzone 7 zu beheizen, wobei die Ringzone 7 auf eine niedrigere Temperatur als die Kernzone 6 aufgeladen wird.

Bei der Anordnung gemäß Fig. 7 ist der Wärmespeicher 1 für den Ladedruck des Verdichters V ausgelegt. Von Vorteil ist, dass der Wärmetauscher WT nur Lufttemperaturen bis 500°C ausgesetzt wird (bei einem Druck von 3-4 bar). Außerdem muss der Wärmetauscher WT nur einen Teil der insgesamt der Turbine T zugeführten Wärmeenergie übertragen.

In einer Abwandlung der Anordnung gemäß Fig. 7 kann der Wärmespeicher 1 auch mit einem Stahlmantel und ohne Eingraben in Erdreich vorgesehen werden. Eine solche Anordnung ermöglicht den wirtschaftlichen Aufbau relativ kleiner Wärmespeicher, beispielsweise mit einer Speichermasse von ca. 10 bis 15 t.

In Fig. 8 ist eine Anordnung mit zwei Wärmespeichereinrichtungen 1 im Wesentlichen gemäß Fig. 1 und 2 gezeigt, die hier drucklos ausgeführt sein können, und denen jeweils ein Wärmetauscher bzw. Rekuperator WT zugeordnet ist. Die Wärmespeicher 1 sind zur Unterscheidung mit HTS-1 bzw. HTS-2 (HTS - Hochtemperaturspeicher) bezeichnet, und in Fig. 8 sind auch Tabellen für die Schaltung von Klappenventilen K1-K12 im Kreislauf je nach Heizung (einerseits mit Heißluft, mit Hilfe einer Heißluftheizung H, und andererseits mit Hilfe einer elektrischen Widerstandsheizung) veranschaulicht. Weiters sind in Fig. 8 Gebläse G gezeigt, wobei einerseits für die Wärmetauscher WT Gebläse und andererseits ein Heißluftgebläse G vorgesehen sind. Die Wärmetauscher WT (bzw. WT1, WT2) können Gegenstrom-Wärmetauscher sein. Überdies wird - ähnlich wie bei der Anordnung von Fig. 7 - der Drehstromgenerator DG von der Heißgasturbine T über ein Getriebe 40 angetrieben.

Der Wärmetauscher WT1 zwischen Verdichteraustritt und Turbineneintritt ersetzt eine Brennkammer (Brennkammer-WT). Der Wärmetauscher WT2 zwischen Turbinenaustritt und Verdichtereintritt kühlt die Turbinenaustrittsluft auf annähernd Umgebungstemperatur ab (Rekuperator-WT).

Die beiden Wärmetauscher WT1, WT2 werden durch die zwei Gebläse G versorgt, die die Luft durch die Wärmespeicher 1 blasen. Der Brennkammer-WT (WT1) wird durch den aufgeheizten Wärmespeicher HTS-1 erwärmt. Der Rekuperator-WT (WT2) liefert die Turbinenabwärme an den zweiten Wärmespeicher HTS-2. Da die Ringzonen-Speicherteile 7 immer wieder auf sehr tiefe Temperaturen (annähernd Umgebungstemperatur) abgekühlt werden, wird daher die Abluft vom Rekuperator-WT (WT2) ebenfalls auf sehr tiefe Temperaturen abgekühlt. Das Nachheizen erfolgt über den extern angeordneten elektrischen Lufterhitzer H. Die heiße Luft heizt nur den inneren Speicher (die Kernzone 6) auf etwa 900°C auf.

Wichtig ist es bei der Anordnung gemäß Fig. 8, den Umschaltzeitpunkt und die Nachheizzeit so zu wählen, dass kein Wärmespeicher 1 überhitzt und auch nicht zu stark abgekühlt wird. Das ist möglich, wenn das Energieangebot gleichmäßig erfolgt. Der bauliche Aufwand ist allerdings relativ groß, da zwei Wärmespeicher 1 und zwei Wärmetauscher WT vorgesehen sind. Weiters ist der Aufwand für die Klappen Ki und die zusätzlichen Gebläse G groß. Von großem Vorteil ist aber, dass (theoretisch) sehr gute Wirkungsgrade erzielbar sind. Die Wärmetauscher 1 können ferner drucklos ausgeführt werden. Weiters kann die Gasturbine T auch mit anderen Gasen als mit Luft betrieben werden, wodurch unter Umständen der Wirkungsgrad verbessert bzw. die Temperaturen im inneren Kreislauf bei gleichem Wirkungsgrad gesenkt werden könnten. Außerdem wäre auch ein Dampfturbinenprozeß mit geschlossenem Dampfkreislauf denkbar.

In Fig. 9 ist eine Anordnung mit zwei Hochtemperaturspeichern 1, im Prinzip gemäß Fig. 5 und 6, mit vereinfachter Luftführung, druckbehaftet, jedoch ohne Wärmetauscher gezeigt. Die Verdichterluft wird in dem aufgeheiztem Wärmetauscher 1 auf 750°C bis 900°C erwärmt. Die heiße Luft expandiert in der Turbine T und liefert die mechanische Energie für den Verdichter V und den Drehstromgenerator DG. Die etwa 500°C heiße Abluft der Turbine T wird durch die kühle Ringzone 7 ungefähr auf die Verdichter-Austrittstemperatur abgekühlt. In der dargestellten Ausführung ist eine elektrische Direktheizung 30 (in Fig. 9 nicht gezeigt) vorgesehen.

Auch hier ist es wieder wichtig, den Umschaltzeitpunkt und die Nachheizzeit so zu wählen, dass kein Wärmespeicher 1 überhitzt wird und auch nicht zu stark abgekühlt wird. Das ist möglich, wenn das Energieangebot sehr gleichmäßig erfolgt. Der bauliche Aufwand ist auch hier insofern relativ groß, als zwei druckbehaftete Wärmespeicher 1 sowie Klappen K1 bis K8 notwendig sind. Es sind aber - jedenfalls theoretisch - sehr gute Wirkungsgrade erzielbar. Außerdem ist kein Wärmetauscher erforderlich. Sehr große Anlagen mit druckbehafteten Sand-Wärmespeichern sind denkbar. Durch den Wegfall der Wärmetauscher sind praktisch nahezu beliebig große Leistungen realisierbar.

In Fig. 10 ist ein schematischer Querschnitt (Horizontalschnitt) eines Wärmetauschers 1 gemäß Fig. 9 veranschaulicht, wobei die durch die Trennwand 5 von der Kernzone 6 getrennte Ringzone 7 sowie weiters eine vergleichsweise dicke Isolierwand 3 innerhalb der äußeren Hülle 2 ersichtlich sind. Die äußere Hülle 2 ist als Druckbehälter ausgeführt. Als Speichermaterial (Wärmespeichermedium 8 bzw. 9) kann hier beispielsweise Magnesit oder Schamott, insbesondere in Formsteinen, vorgesehen sein.

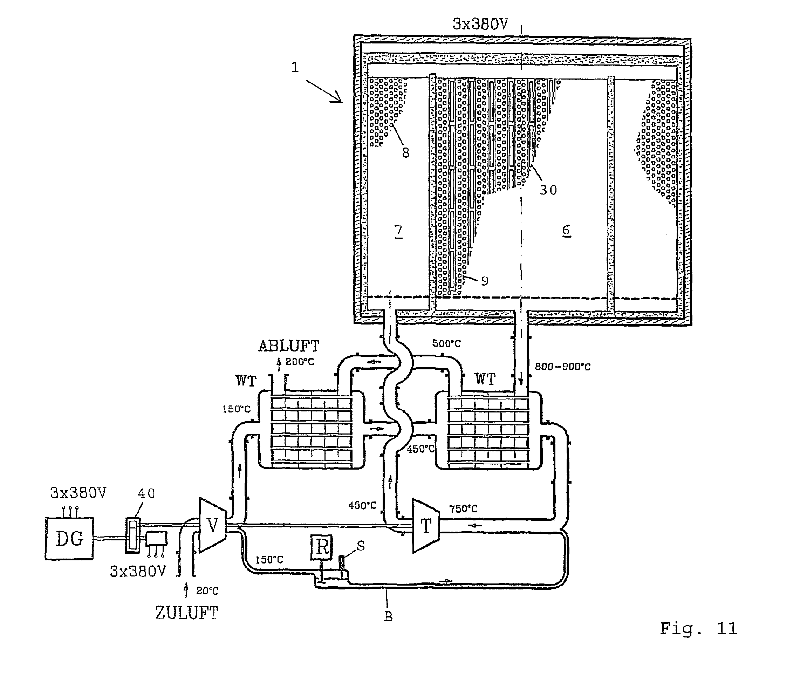

In Fig. 11 ist eine Anordnung mit einem Hochtemperatur-Wärmespeicher 1 gemäß Fig. 5 und 6, mit vereinfachter Luftführung und in druckloser Ausführung, gezeigt, wobei dieser Wärmespeicher 1 mit zwei Wärmetauschern WT zusammenarbeitet, die entsprechend zwei Temperaturbereichen aufgeteilt sind und einem einzelnen Wärmetauscher mit entsprechend großem Temperaturbereich entsprechen. Die Verdichterluft wird hier dem in Fig. 11 linken Wärmetauscher WT und von diesem dem für höhere Temperaturen vorgesehenen rechten Wärmetauscher WT und von da der Turbine T zugeführt. Die beiden Wärmetauscher WT (Druckauslegung auf 3-4 bar) erhitzen die Turbinenluft auf etwa 750°C bis 850°C. Die heiße Luft expandiert in der Turbine T und liefert die mechanische Energie für den Verdichter V und den Drehstromgenerator DG. Die etwa 500°C heiße Abluft der Turbine T wird der Ringzone 7 des Wärmespeichers 1 zugeführt. Im Wärmespeicher 1 wird dann die Luft z.B. mittels einer elektrischen Heizung 30 auf 800°C bis 900°C erwärmt. Diese heiße Luft wird danach in dem geteilten Wärmetauscher WT auf etwa 200°C abgekühlt. Eine weitere Abkühlung der Abluft wäre durch zusätzliche Wärmeverbraucher (Heizung, Prozesswärme, Kühlgeräte etc.) möglich. Um die Turbineneintrittstemperatur zu regeln, ist wiederum ein Bypass B zwischen Verdichteraustritt und Turbineneintritt geschaltet.

Die Heizung des Wärmespeichers 1 erfolgt wie erwähnt hier direkt durch eine elektrische Widerstandsheizung 30. Die Heizkörper sind in Formsteinen des Wärmespeichers 1 eingebettet. Auch hier kann auch die Ringzone 7 beheizt werden, wobei das Speichermaterial 8 auf geringere Temperatur als das Speichermaterial 9 in der Kernzone 6 aufgeheizt wird.

Bei dieser Anordnung ist der eine Wärmetauscher WT auf etwa 900°C Lufttemperatur auszulegen. Außerdem ist die gesamte Wärmeleistung der Turbine T über den Wärmetauscher WT zuzuführen. Von Vorteil ist aber, dass der Wärmespeicher 1 drucklos ausgeführt werden kann. Es sind somit der Größe des Wärmespeichers 1 keine Grenzen durch mechanische Druckbelastungen gesetzt.

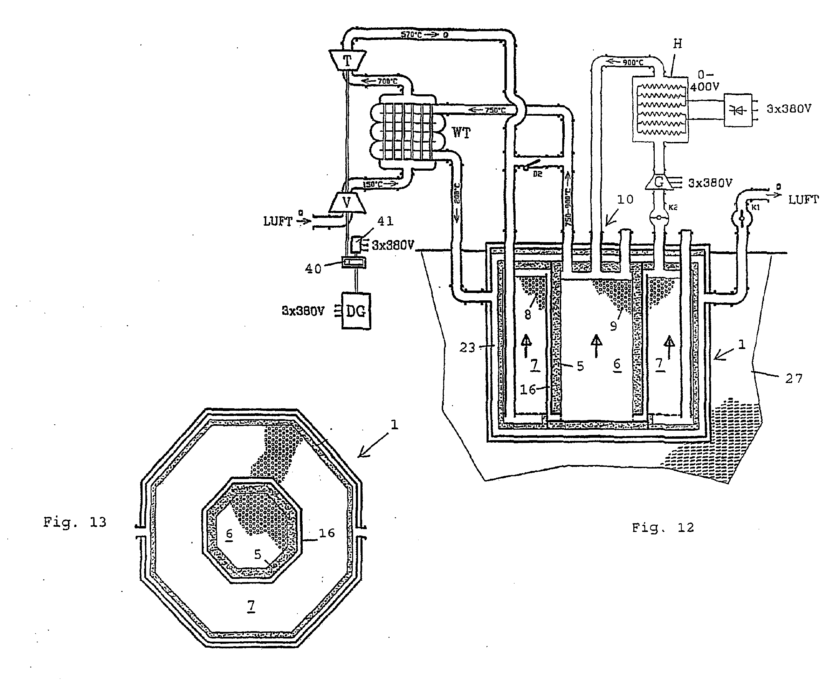

Die Anordnung gemäß Fig. 12 entspricht weitgehend jener gemäß Fig. 11, mit dem Unterschied, dass ein einheitlicher Wärmetauscher WT zur Erhitzung der Luft auf ca. 700°C vorgesehen ist, die der Turbine T zugeführt wird, und dass ein Wärmespeicher 1 im Prinzip gemäß Fig. 1 und 2 vorgesehen ist. Wie jedoch aus dem Horizontalschnitt durch diesen Wärmespeicher 1 gemäß Fig. 13 ersichtlich ist, ist hier die Verbindungsleitung 16 an der Trennwand 5 als Ringkanal an der Trennwand 5 außen ausgeführt. Weiters kann in der Anordnung gemäß Fig. 12 wiederum eine Heißluftheizung H zur Erhitzung des Wärmespeichermediums 9 in der Kernzone 6 des Wärmespeichers 1 vorgesehen sein, d.h. als Heizmittel 10 dient wiederum eine Heißluftzufuhr (mit einer Lufttemperatur von ca. 900°C). In einer Querleitung zwischen der Wärmetauscher-Zufuhrleitung und der Turbinen-Abluftleitung ist ein Drosselventil D2 angeordnet. Weiters ist dem mechanischen Teil ein Starter 41 zugeordnet, der mit dem Getriebe 40 gekuppelt ist. Diese Anordnung ist durchaus jener gemäß Fig. 11 vergleichbar, wobei jedoch mit der Wärmetauscher-Abluft (mit einer Temperatur von ca. 200°C) noch die Außenwandung des Wärmespeichers 1 (Speicherraum 23) aufgeheizt wird, so dass die Wärmeverluste des Wärmespeichers 1 durch das höhere Temperaturniveau der Wandung verringert werden. Das Nachheizen erfolgt über den extern angeordneten elektrischen Lufterhitzer H, wobei die heiße Luft hier nur das Speichermaterial 9 in der Kernzone 6 des Wärmespeichers - auf ungefähr 900°C - aufheizt. Bei dieser Anordnung muss der Wärmetauscher WT wiederum für relativ hohe Lufttemperaturen (bis zu etwa 900°C) ausgelegt werden, und die gesamte Wärmeleistung der Turbine T wird über den Wärmetauscher WT zugeführt. Aber auch hier ist vorteilhaft, dass der Wärmespeicher 1 drucklos ausgeführt werden kann, so dass keine Grenzen durch mechanische Druckbelastungen für den Wärmespeicher 1 gesetzt sind. Durch die gezeigte Luftführung findet außerdem ein Temperaturausgleich in der heißen Kernzone 6 langsamer statt, da die beiden Luftströme in der Kernzone 6 und in der Ringzone 7 nach oben gerichtet sind, was zu einer geringeren Konvektion führt.

Abschließend wird nun noch anhand der Fig. 14 und 15 eine elektrische Widerstandsheizeinheit 50 (Fig. 15) erläutert werden, die aus rechenförmig ausgeschnittenen Blechen 51 (Fig. 14) aufgebaut ist. Jedes Blech 51 weist an gegenüberliegenden Längsrändern Verbindungsstreifen 52, 53 auf; im einen Verbindungsstreifen 52 sind schlitzförmige Einstecköffnungen 54 vorgesehen, und der andere Verbindungsstreifen 53 trägt Einsteckvorsprünge 55. Weiters weist dieser andere Verbindungsstreifen 53 eine in Längsrichtung des Verbindungsstreifens 53 verlaufende Falzlinie 56 auf, um die der Verbindungsstreifen 53 zum Zusammenbau der Einheit 50 gemäß Fig. 15 gebogen wird. Die Bleche 51 werden abwechselnd mit dem Verbindungsstreifen 53 oben bzw. unten in der Einheit 50 vorgesehen und dabei jeweils mit dem (gemäß der Darstellung in Fig. 15 rechten) Blech 51 durch Einstecken der Einsteckvorsprünge 55 in die Einstecköffnungen 54 des anderen Verbindungsstreifens 52 sowie durch nachfolgendes Verschweißen gekuppelt. Dadurch wird eine selbsttragende Einheit 50 erhalten, die ohne zusätzliche Trägerkonstruktion, etwa mit einem keramischen Träger oder dergl., auskommt.

Als eigentliche Widerstandsheizelemente fungieren die durch das Ausschneiden erhaltenen dünnen Stege 57 zwischen den beiden Verbindungsstreifen 52, 53. Diese Stege 57 haben beispielsweise eine Breite von bloß 1,5 mm, und die beispielsweise aus Edelstahl bestehenden Bleche 51 haben eine Stärke von 1,5 mm. Bei entsprechender Stromzuführung über in Fig. 15 ganz schematisch gezeigte Klemmen 58, 59 erhitzen sich die Stege 57 beim Stromdurchfluss, wobei durch das Zusammenstecken (s. die Einsteckvorsprünge 55) und das nachfolgende Zusammenschweißen die elektrische Verbindung zwischen den Blechen sichergestellt wird.

Aus Fig. 14 ist weiters ersichtlich, dass die Verbindungsstreifen 52, 53 auf der gemäß Fig. 14 rechten Seite weiter vorstehen als auf der linken Seite. Dadurch wird beim Zusammenbau zur Einheit 50 mit abwechselnd um 180° gegeneinander verdrehten Blechen 51 ein Versatz der Stege 57 innerhalb der Einheit 50, nämlich von Blech 51 zu Blech 51, erzielt, so dass bei Hindurchstreichen von Luft durch die Zwischenräume zwischen den Stegen 57 eine gute Wärmeübertragung stattfinden kann.

Die Widerstandsheizeinheit 50 kann in einer Heißluftheizung H (s. Fig. 8, 12) eingebaut werden, um die dem Wärmespeicher 1 zuzuführende Luft auf die gewünschte Temperatur, z.B. ca. 900°C, zu erhitzen, oder sie kann direkt im Wärmespeicher 1, zumindest in dessen Kernzone 6, angebracht werden (vgl. z.B. die Widerstandsheizeinheit 30 in Fig. 3 und 4), um dort das Speichermaterial 9 (bzw. gegebenenfalls auch 8) auf die gewünschte Temperatur zu erhitzen. In diesem Fall ist es zweckmäßig, das Speichermaterial 9 (8) in Form von Formsteinen (Schamott etc.) vorzusehen, die dann v.a. durch Strahlungshitze mit Hilfe der Heizeinheit 50 erhitzt werden.

## Patentansprüche

1. Wärmespeichereinrichtung (1) mit einem Behälter (4), der durch eine Trennwand (5) in eine innere Kernzone (6) und in eine äußere Ringzone (7) unterteilt ist, die ein Wärmespeichermedium (8) enthält, wobei auch die innere Kernzone (6) zur Bildung einer heißen Zone ein Wärmespeichermedium (9) enthält, und dieser Kernzone (6) Heizmittel (10) zugeordnet sind, **dadurch gekennzeichnet, dass** die Heizmittel (10) für das Wärmespeichermedium (9) der Kernzone (6) eine elektrische Widerstandsheizung (50) mit rechenförmig ausgeschnittenen Blechen (51) aufweisen, die an gegenüberliegenden Rändern Verbindungsstreifen (52, 53) aufweisen, die je mit Einstecköffnungen (54) bzw. -vorsprüngen (55) versehen sind, die zur Verbindung mit benachbarten Blechen (51) vorgesehen sind, und zwischen denen sich durch das Ausschneiden erhaltene Stege (57) als Heizelemente erstrecken.

2. Wärmespeichereinrichtung nach Anspruch 1, **dadurch gekennzeichnet, dass** für das Wärmespeichermedium (9) der Kernzone (6) eine Heißluftzufuhr, vorzugsweise an der Zonen-Oberseite, vorgesehen ist.

3. Wärmespeichereinrichtung nach Anspruch 1, **dadurch gekennzeichnet, dass** als Heizmittel für das Wärmespeichermedium (9) die elektrische Widerstandsheizung (30) der Kernzone (6) vorgesehen ist.

4. Wärmespeichereinrichtung nach einem der Ansprüche 1 bis 3, **dadurch gekennzeichnet, dass** das Heizmittel primär dem oberen Teil des Wärmespeichermediums (9) der Kernzone (6) zugeordnet ist, um im Betrieb in der Kernzone (6) eine von oben nach unten sinkende Temperatur herbeizuführen.

5. Wärmespeichereinrichtung nach einem der Ansprüche 1 bis 4, **dadurch gekennzeichnet, dass** das Wärmespeichermedium (8, 9) aus quarzfreiem Gestein besteht.

6. Wärmespeichereinrichtung nach einem der Ansprüche 1 bis 5, **dadurch gekennzeichnet, dass** das Wärmespeichermedium (8, 9) aus Steinen aus Magnesit, aus Schamott oder dergl. besteht.

7. Wärmespeichereinrichtung nach einem der Ansprüche 1 bis 6, **dadurch gekennzeichnet, dass** das Wärmespeichermedium (8, 9) annähernd kugelförmige Steine mit einem Durchmesser von ca. 5 cm bis 10 cm enthält.

8. Wärmespeichereinrichtung nach einem der Ansprüche 1 bis 7, **dadurch gekennzeichnet, dass** die Trennwand (5) wenigstens eine Verbindungsleitung (16) für ein Wärmetauschermedium enthält, die die beiden Zonen (6, 7) miteinander verbindet.

9. Wärmespeichereinrichtung nach Anspruch 8, **dadurch gekennzeichnet, dass** die Verbindungsleitung (16) die Unterseite der Kernzone (6) mit der Oberseite der Ringzone (7) verbindet.

10. Wärmespeichereinrichtung nach einem der Ansprüche 1 bis 9, **dadurch gekennzeichnet, dass** der Behälter (4) druckfest ausgeführt ist.

11. Wärmespeichereinrichtung nach einem der Ansprüche 1 bis 10, **dadurch gekennzeichnet, dass** an der Oberseite der Ringzone (7) eine Wärmetauschermedium-Leitung (18) angeschlossen ist.

12. Wärmespeichereinrichtung nach einem der Ansprüche 1 bis 11, **dadurch gekennzeichnet, dass** sich eine Wärmetauschermedium-Leitung (20) in der Ringzone (7) von deren Oberseite durch das in der Ringzone (7) vorhandene Wärmespeichermedium (8) zum Boden der Ringzone (7) erstreckt.

13. Wärmespeichereinrichtung nach einem der Ansprüche 1 bis 12, **dadurch gekennzeichnet, dass** in der Kernzone (6) und/oder in der Ringzone (7) bodenseitig ein Rost (14, 22) mit darunter befindlichem Sammelraum (15, 21) vorgesehen ist.

14. Wärmespeichereinrichtung nach Anspruch 13, **dadurch gekennzeichnet, dass** unterhalb vom Kernzonen-Rost (14) und Ringzonen-Rost (22) durch die Trennwand (5) voneinander getrennte Sammelräume (15, 21) gebildet sind.

15. Wärmespeichereinrichtung nach Anspruch 14, **dadurch gekennzeichnet, dass** an die Sammelräume (15, 21) nach außen führende Wärmetauschermedium-Leitungen (12', 20') angeschlossen sind.

16. Wärmespeichereinrichtung nach Anspruch 14 und Anspruch 8, **dadurch gekennzeichnet, dass** die Verbindungsleitung (16) von dem Sammelraum (15) unter dem Kernzonen-Rost (14) zur Oberseite der Ringzone (7) führt.

17. Wärmespeichereinrichtung nach einem der Ansprüche 1 bis 16, **dadurch gekennzeichnet, dass** der Behälter (4) mit einer äußeren Hülle (2) und einer inneren Isolierwand (3) ausgeführt ist.

18. Wärmespeichereinrichtung nach Anspruch 17, **dadurch gekennzeichnet, dass** zwischen der äußeren Hülle (2) und der inneren Isolierwand (3) ein Luftschicht-Isolierraum (23) vorgesehen ist.

19. Wärmespeichereinrichtung nach einem der Ansprüche 1 bis 18, **dadurch gekennzeichnet, dass** die Trennwand (5) zwischen der Kernzone (6) und der Ringzone (7) isolierend ausgeführt ist.

20. Wärmespeichereinrichtung nach einem der Ansprüche 1 bis 19, **dadurch gekennzeichnet, dass** die Bleche (51) aus Edelstahl bestehen.

21. Verwendung einer Wärmespeichereinrichtung (1) nach einem der Ansprüche 1 bis 20 in einem Kreis mit einer Turbine (T), die einen Verdichter (V) und einen Generator (DG) antreibt, und gegebenenfalls mit einem oder mehreren Wärmetauscher(n) (WT).

## Claims

1. A heat accumulator device (1) comprising a container (4) divided by a partition wall (5) into an inner core zone (6) and into an outer ring zone (7) comprising a heat storage medium (8), wherein the inner core zone (6) also comprises a heat storage medium (9) for forming a hot zone, and wherein heating means (10) are assigned to this core zone (6), **characterized in that** the heating means (10) for the heat storage medium (9) of the core zone (6) comprises an electrical resistance heating (50) with sheets (51) cut out like a rake and comprising, at opposite edges thereof, connecting strips (52, 53) which are each provided with insertion apertures (54) or projections (55), respectively, which are provided for connection with adjacent sheets (51) and webs (57), obtained by the cutting, extending between them as heating elements.

2. The heat accumulator device according to claim 1, **characterized in that** a hot air supply, preferably at the upper side of the zone, is provided for the heat storage medium (9) of the core zone (6).

3. The heat accumulator device according to claim 1, **characterized in that** the electrical resistance heating (30) of the core zone (6) is provided as heating means for the heat storage medium (9).

4. The heat accumulator device according to any of claims 1 to 3, **characterized in that** the heating means is primarily assigned to the upper portion of the heat storage medium (9) of the core zone (6) so as to cause a temperature decreasing from top to bottom in the core zone (6) during operation.

5. The heat accumulator device according to any of claims 1 to 4, **characterized in that** the heat storage medium (8, 9) consists of quartz-free rock.

6. The heat accumulator device according to any of claims 1 to 5, **characterized in that** the heat accumulator medium (8, 9) consists of stones of magnesite, of fireclay or the like.

7. The heat accumulator device according to any of claims 1 to 6, **characterized in that** the heat storage medium (8, 9) comprises approximately ball-shaped stones with a diameter of approx. 5 cm to 10 cm.

8. The heat accumulator device according to any of claims 1 to 7, **characterized in that** the partition wall (5) comprises at least one connecting line (16) for a heat exchanger medium which connects the two zones (6, 7) with each other.

9. The heat accumulator device according to claim 8, **characterized in that** the connecting line (16) connects the lower side of the core zone (6) with the upper side of the ring zone (7).

10. The heat accumulator device according to any of claims 1 to 9, **characterized in that** the container (4) is designed to be pressure-resistant.

11. The heat accumulator device according to any of claims 1 to 10, **characterized in that** a heat exchanger medium line (18) is connected to the upper side of the ring zone (7).

12. The heat accumulator device according to any of claims 1 to 11, **characterized in that** a heat exchanger medium line (20) extends in the ring zone (7) from the upper side thereof through the heat storage medium (8) contained in the ring zone (7) to the bottom of the ring zone (7).

13. The heat accumulator device according to any of claims 1 to 12, **characterized in that** in the core zone (6) and/or in the ring zone (7) a grate (14, 22) is provided on the bottom, with a collecting space (15, 21) storage therebelow.

14. The heat accumulator device according to claim 13, **characterized in that** collecting spaces (15, 21) separated from each other by the partition wall (5) are formed below the core zone grate (14) and the ring zone grate (22).

15. The heat accumulator device according to claim 14, **characterized in that** heat exchanger medium lines (12', 20') leading to the outside are connected to the collecting spaces (15, 21).

16. The heat accumulator device according to claim 14 and claim 8, **characterized in that** the connecting line (16) leads from the collecting space (15) below the core zone grate (14) to the upper side of the ring zone (7).

17. The heat accumulator device according to any of claims 1 to 16, **characterized in that** the container (4) is designed with an outer sheath (2) and an inner insulating wall (3).

18. The heat accumulator device according to claim 17, **characterized in that** an air layer insulation space (23) is provided between the outer sheath (2) and the inner insulating wall (3).

19. The heat accumulator device according to any of claims 1 to 18, **characterized in that** the partition wall (5) between the core zone (6) and the ring zone (7) is designed to be insulating.

20. The heat accumulator device according to any of claims 1 to 19, **characterized in that** the sheets (51) consist of stainless steel.

21. The use of a heat accumulator device (1) according to any of claims 1 to 20 in a circuit with a turbine (T) driving a compressor (V) and a generator (DG), and with one or a plurality of heat exchangers (WT) if applicable.

## Revendications

1. Dispositif accumulateur de chaleur (1) comprenant un récipient (4), qui est divisé par une paroi de séparation (5) en une zone de noyau interne (6) et une zone annulaire externe (7), qui contient un milieu accumulateur de chaleur (8), la zone de noyau interne (6) contenant également un milieu accumulateur de chaleur (9) pour former une zone chaude, et des moyens de chauffage (10) étant associés à cette zone de noyau (6), **caractérisé en ce que** les moyens de chauffage (10) pour le milieu accumulateur de chaleur (9) de la zone de noyau (6) présentent un chauffage électrique à résistance (50) avec des tôles (51) découpées en forme de râteau, lesquelles présentent, sur des bords opposés, des bandes de liaison (52, 53) qui sont à chaque fois pourvues d'ouvertures d'enfichage (54), respectivement de saillies d'enfichage (55), qui sont prévues pour se connecter à des tôles adjacentes (51), et entre lesquelles s'étendent des nervures (57) obtenues par le découpage et servant d'éléments de chauffage.

2. Dispositif accumulateur de chaleur selon la revendication 1, **caractérisé en ce qu'**un apport d'air chaud, de préférence au niveau du côté supérieur de la zone, est prévu pour le milieu accumulateur de chaleur (9) de la zone de noyau (6).

3. Dispositif accumulateur de chaleur selon la revendication 1, **caractérisé en ce que** l'on prévoit comme moyen de chauffage pour le milieu accumulateur de chaleur (9) le chauffage électrique à résistance (30) de la zone de noyau (6).

4. Dispositif accumulateur de chaleur selon l'une quelconque des revendications 1 à 3, **caractérisé en ce que** le moyen de chauffage est associé principalement à la partie supérieure du milieu accumulateur de chaleur (9) de la zone de noyau (6) afin d'engendrer, pendant le fonctionnement, dans la zone de noyau (6) une température diminuant depuis le haut vers le bas.

5. Dispositif accumulateur de chaleur selon l'une quelconque des revendications 1 à 4, **caractérisé en ce que** le milieu accumulateur de chaleur (8, 9) se compose de roche sans quartz.

6. Dispositif accumulateur de chaleur selon l'une quelconque des revendications 1 à 5, **caractérisé en ce que** le milieu accumulateur de chaleur (8, 9) se compose de pierres à base de magnésite, de chamotte ou similaire.

7. Dispositif accumulateur de chaleur selon l'une quelconque des revendications 1 à 6, **caractérisé en ce que** le milieu accumulateur de chaleur (8, 9) contient des pierres de forme approximativement sphérique ayant un diamètre d'environ 5 cm à 10 cm.

8. Dispositif accumulateur de chaleur selon l'une quelconque des revendications 1 à 7, **caractérisé en ce que** la paroi de séparation (5) contient au moins une conduite de liaison (16) pour un milieu échangeur de chaleur, qui relie l'une à l'autre les deux zones (6, 7).

9. Dispositif accumulateur de chaleur selon la revendication 8, **caractérisé en ce que** la conduite de liaison (16) relie le côté inférieur de la zone de noyau (6) au côté supérieur de la zone annulaire (7).

10. Dispositif accumulateur de chaleur selon l'une quelconque des revendications 1 à 9, **caractérisé en ce que** le récipient (4) est réalisé de manière résistant à la pression.

11. Dispositif accumulateur de chaleur selon l'une quelconque des revendications 1 à 10, **caractérisé en ce qu'**une conduite de milieu échangeur de chaleur (18) est raccordée au côté supérieur de la zone annulaire (7).

12. Dispositif accumulateur de chaleur selon l'une quelconque des revendications 1 à 11, **caractérisé en ce qu'**une conduite de milieu échangeur de chaleur (20) s'étend dans la zone annulaire (7) depuis le côté supérieur de celle-ci à travers le milieu accumulateur de chaleur (8) présent dans la zone annulaire (7) jusqu'au fond de la zone annulaire (7).

13. Dispositif accumulateur de chaleur selon l'une quelconque des revendications 1 à 12, **caractérisé en ce qu'**une grille (14, 22) avec un espace collecteur situé en dessous d'elle (15, 21) est prévue dans la zone de noyau (6) et/ou dans la zone annulaire (7) du côté du fond.

14. Dispositif accumulateur de chaleur selon la revendication 13, **caractérisé en ce qu'**en dessous de la grille de la zone de noyau (14) et de la grille de la zone annulaire (22) sont formés des espaces collecteurs (15, 21) séparés l'un de l'autre par la paroi de séparation (5).

15. Dispositif accumulateur de chaleur selon la revendication 14, **caractérisé en ce que** des conduites de milieu échangeur de chaleur (12', 20') conduisant vers l'extérieur sont raccordées aux espaces collecteurs (15, 21).

16. Dispositif accumulateur de chaleur selon la revendication 14 et la revendication 8, **caractérisé en ce que** la conduite de liaison (16) conduit depuis l'espace collecteur (15) en dessous de la grille de la zone de noyau (14) jusqu'au côté supérieur de la zone annulaire (7).

17. Dispositif accumulateur de chaleur selon l'une quelconque des revendications 1 à 16, **caractérisé en ce que** le récipient (4) est réalisé avec une enveloppe extérieure (2) et une paroi isolante intérieure (3).

18. Dispositif accumulateur de chaleur selon la revendication 17, **caractérisé en ce qu'**entre l'enveloppe extérieure (2) et la paroi isolante intérieure (3) est prévu un espace isolant à couche d'air (23).

19. Dispositif accumulateur de chaleur selon l'une quelconque des revendications 1 à 18, **caractérisé en ce que** la paroi de séparation (5) est réalisée de manière isolante entre la zone de noyau (6) et la zone annulaire (7).

20. Dispositif accumulateur de chaleur selon l'une quelconque des revendications 1 à 19, **caractérisé en ce que** les tôles (51) se composent d'acier spécial.

21. Utilisation d'un dispositif accumulateur de chaleur (1) selon l'une quelconque des revendications 1 à 20, dans un circuit comprenant une turbine (T), qui entraîne un compresseur (V) et un générateur (DG), et éventuellement avec un ou plusieurs échangeurs de chaleur (WT).
